Europäisches Patentamt

European Patent Office

Office européen des brevets

(19)

(11) EP 0 549 446 B1

(12) **FASCICULE DE BREVET EUROPEEN**

(45) Date de publication et mention
de la délivrance du brevet:
**04.06.1997 Bulletin 1997/23**

(51) Int Cl.6: **H04N 5/33**, H04N 5/217,
G02B 23/12

(21) Numéro de dépôt: **92403486.1**

(22) Date de dépôt: **21.12.1992**

(54) **Caméra d'observation, notamment infrarouge, à détecteur multi-éléments homogénéisé en sensibilité**

Beobachtungskamera, insbesondere für Infrarot, mit einem in der Empfindlichkeit homogenisierten Multielementdetektor

Observation camera, especially infrared, with a multi-element detector homgenised in sensitivity

(84) Etats contractants désignés:
**DE FR GB IT NL SE**

(30) Priorité: **26.12.1991 FR 9116166**

(43) Date de publication de la demande:
**30.06.1993 Bulletin 1993/26**

(73) Titulaire: **THOMSON-CSF**
**75008 Paris (FR)**

(72) Inventeurs:
• **Fouilloy, Jeann-Pierre**
**F-92402 Courbevoie Cedex (FR)**

• **Marche, Pierre**
**F-92402 Courbevoie Cedex (FR)**
• **Rollin, Joel**
**F-92402 Courbevoie Cedex (FR)**

(74) Mandataire: **Lincot, Georges et al**
**THOMSON-CSF-S.C.P.I.,**
**13, Avenue du Président**
**Salvador Allende**
**94117 Arcueil Cédex (FR)**

(56) Documents cités:
**EP-A- 0 365 948          EP-A- 0 419 342**

**Description**

L'invention concerne la correction des défauts d'images issues de caméra à détecteur multi-éléments et a pour objet, plus précisément, une caméra d'observation à détecteur multi-éléments homogénéisé en sensibilité. L'invention s'applique en particulier, mais non exclusivement, aux caméras d'imagerie thermique équipées de détecteurs multi-éléments.

Les détecteurs multi-éléments comportent une mosaïque de capteurs élémentaires organisés en barrette ou en matrice qui analysent une scène à observer, respectivement avec ou sans l'aide d'un système de balayage opto-mécanique, par projection de cette scène sur les capteurs à l'aide d'un système optique adapté. Les systèmes d'imagerie utilisant de tels détecteurs fournissent un signal vidéo traduisant successivement la luminance instantanée de chaque pixel. Dans les systèmes d'imagerie infrarouge, le signal vidéo est formé par transfert et multiplexage des charges libérées par les capteurs, fonction de la luminance reçue par chaque capteur, à l'aide de dispositifs électroniques connus du type à couplage ou à transfert de charges. La quantité de charges transférée est également fonction de la durée entre deux lectures de trame d'image. En imagerie infrarouge, le détecteur et le dispositif à transfert de charges sont disposés dans le plan froid d'un cryostat.

En règle générale, une image comporte un fond ayant une certaine luminance, et le signal vidéo comporte alors une composante continue fonction de la luminance du fond d'image. Cette luminance est elle-même fonction de la température du fond, lorsqu'il s'agit d'images infrarouges. Cette composante continue a une valeur relative très importante par rapport à la composante variable représentant une scène. Par exemple, dans les bandes spectrales s'étendant de 3 à 5 microns et de 8 à 12 microns, un écart de température égal à un degré de la scène par rapport au fond, est traduit typiquement par une variation de 1 % du signal vidéo par rapport à la composante continue.

Les systèmes d'imagerie utilisant des mosaïques et plus particulièrement les systèmes d'imagerie infrarouges sont donc soumis à la difficulté suivante :

- d'une part, le contraste des objets est très faible : pour un intervalle de température de 1 °C, il est de l'ordre du pour cent et l'on s'intéresse en imagerie infrarouge à des différences de températures de l'ordre du dixième de degré ;
- d'autre part, les différents capteurs élémentaires n'ont pas la même sensibilité : en effet, pendant l'analyse d'une scène représentant un fond uniforme, les capteurs fournissent des réponses légèrement différentes qui constituent un signal vidéo comportant un bruit superposé à une composante continue égale à la réponse moyenne ; les valeurs de sensibilité des capteurs d'une même mosaïque se répartissent, en première approximation, selon une loi gaussienne ayant un écart-type égal à quelques pourcents.

En l'absence d'homogénéisation des sensibilités des capteurs, une scène représentant un fond uniforme est restituée par des images comportant des défauts constants d'uniformité. Ces défauts d'uniformité sont gênants non seulement pour l'observation des images restituées, mais aussi pour une exploitation telle qu'une détection de cible ou une poursuite de cible.

Plus précisément, la différence de comportement d'un capteur à l'autre peut s'exprimer par la variation d'une fonction de la forme :

$$R_i = a_i + b_i \, F$$

$R_i$ étant la réponse électrique du capteur $i$ ; $a_i$ une quantité indépendante du flux mais variant sensiblement avec la température de refroidissement et le vieillissement ; $b_i$, un facteur de proportionnalité, qui peut également varier mais reste plus stable que $a_i$ ; $F$, le flux tombant sur le capteur considéré.

Si un capteur $j$ reçoit un flux $F + \delta F$, $\delta F$ constituant le signal optique utile, la différence de réponses d'un capteur $i$ à un capteur $j$ s'exprime par

$$R_j - R_i = a_j - a_i + F \, (b_j - b_i) + \delta F b_j$$

Si aucune correction n'est apportée, $\delta F b_j$ qui représente le signal électrique utile, est noyé dans les variations des coefficients propres à chaque capteur; l'homogénéisation des sensibilités consiste donc à rendre les termes $a_j - a_i$ et $F(b_j - b_i)$ très petits devant les variations qui affectent $\delta F b_j$.

Pour homogénéiser les sensibilités des capteurs, un traitement électronique et éventuellement numérique du signal vidéo consiste, classiquement, à mettre en mémoire, pendant une période de calibration, des valeurs de référence du signal vidéo d'une image correspondant à un flux continu $F_o$ et à soustraire, en imagerie courante, les valeurs du signal vidéo de cette image respectivement aux valeurs du signal vidéo des images courantes obtenues pour un flux moyen F = Fo+dF. Ainsi, entre deux éléments i et j, la différence de réponse pour un éclairement uniforme est alors de type résiduelle :

$$R_j - R_i = dF\,(b_j - b_i)$$

Autour d'une valeur de flux F proche de $F_o$, l'écart $R_j - R_i$ reste petit, car les grandes composantes continues du type $a_i$ et $F_o b_i$ ont été éliminées. Ceci signifie que si la température moyenne de la scène correspondant à un flux moyen $F_o$ est égale à $T_o$, l'équilibrage, c'est-à-dire la mémorisation des valeurs de référence, doit être réalisé autour du même flux moyen correspondant à cette température moyenne $T_o$.

Pour atteindre ce résultat, un système de compensation connu, agissant pendant la phase de calibration, comprend :

- un commutateur optique, miroir basculant ou tournant, disposé sur le trajet optique du flux de formation d'image, permettant de faire l'image des capteurs sur un corps noir de référence dont la température peut être ajustée, par exemple par un dispositif à effet Peltier ;
- un dispositif de mesure de l'intervalle de température moyen ; entre la scène et le corps noir et
- une boucle d'asservissement de la température du corps noir de façon à annuler l'intervalle de température précédent.

Dans ces conditions, pendant que les capteurs forment une image sur le corps noir, ils reçoivent un flux égal au flux moyen de la scène. Il est donc possible de mémoriser les valeurs du signal vidéo de référence.

Ce dispositif est compliqué puisqu'il conduit à placer dans la caméra un corps noir asservi en température à une valeur égale à la température de la scène, ce qui, notamment, quand cette température est beaucoup plus froide que la caméra, pose de nombreux problèmes liés à la condensation sur le corps noir, à la rapidité de réponse de la boucle d'asservissement, au contrôle et à la mesure différentielle de la température, etc...

Un second système d'homogénéisation connu vise, en plus de cette correction des décalages continus $a_i + Fb_i$, à annuler la différence de réponse résiduelle. Pour ce faire, l'image des capteurs est effectuée sur un deuxième corps noir à température différente du précédent. Les capteurs reçoivent un flux différentiel dF. On peut alors introduire des facteurs multiplicatifs sur les coefficients $b_i$ de façon à rendre toutes les réponses différentielles $R_i$ égales à une valeur moyenne R. Le second procédé est un perfectionnement du premier : les problèmes évoqués subsistent et sont même accrus du fait de l'utilisation de deux corps noirs.

L'invention propose une homogénéisation qui soit plus simple à réaliser que les dispositifs de l'art antérieur, tout en obtenant des performances comparables ; un tel objectif est atteint par exposition directe des capteurs à un flux correspondant à la température moyenne de la scène observée par interposition d'un élément optique dans le flux lumineux. Une telle interposition amène en effet chaque capteur à être conjugué d'une pupille d'entrée où se forme un éclairement uniforme lié à la luminance moyenne de la scène.

Plus précisément, l'invention a pour objet une caméra à détecteur multi-éléments homogénéisé en sensibilité, comprenant un système optique de traitement du flux lumineux d'entrée pénétrant dans une pupille d'entrée pour former une image optique de la scène observée sur un détecteur constitué d'une mosaïque de capteurs élémentaires et un dispositif de traitement du signal vidéo afin de soustraire des valeurs de référence mémorisées du signal vidéo pendant une période de calibration aux valeurs courantes, caractérisée en ce qu'elle comprend également un élément optique commutable interposé, en mode calibration, dans le flux de formation d'image optique et positionné dans le système entre un groupe optique d'entrée et un groupe optique de projection du flux lumineux sur le détecteur, cet élément commutable conjuguant chaque capteur avec un point situé dans la pupille d'entrée via une image intermédiaire située dans un plan d'image intermédiaire, et les caractéristiques en grandissement et en distance focale de cet élément optique étant choisies pour qu'il y ait en mode calibration un recouvrement partiel des champs de vue individuels des capteurs, et un recouvrement partiel des champs de vue de chacun des capteurs en mode calibration et du champ de vue de la caméra en mode imagerie courante.

Selon un exemple de réalisation, la caméra d'observation selon l'invention utilise un élément optique composé de deux lentilles minces dont les caractéristiques, distances focales et positionnements, peuvent être définies pour amener en coïncidence les champs de vue des capteurs en mode calibration et le champ de vue de la caméra en mode imagerie. De ce fait, les valeurs de référence mémorisées correspondent toutes à un même flux moyen qui est le flux moyen de la scène observée par la caméra en imagerie courante. Cette solution à deux lentilles présente l'avantage de résoudre rigoureusement le problème soulevé, en corrigeant exactement les disparités de sensibilité des capteurs.

Selon un autre exemple de réalisation, l'élément optique comprend une seule lentille mince dont les caractéristiques sont définies de manière à réaliser un compromis entre le recouvrement entre les champs de vue des capteurs en mode calibration et le champ de vue de la caméra en mode imagerie. Ce mode de réalisation permet de résoudre de manière satisfaisante le problème posé avec une mise en oeuvre particulièrement simple.

L'invention sera plus explicitement exposée et d'autres caractéristiques et avantages apparaîtront à la lecture de la description suivante, illustrée par les figures annexées qui représentent, respectivement :

- les figures 1a et 1b, un schéma de réalisation en coupe du système optique d'une caméra d'observation selon l'invention, respectivement en mode imagerie courante et en mode calibration ;
- la figure 2, un exemple de réalisation schématique du système optique d'une caméra d'observation selon l'invention comprenant un élément optique commutable composé de deux lentilles minces ;
- les figures 3a à 3d, différents rapports de champs de vue entre le champ de vue des capteurs centraux en mode de calibration et l'image projetée sur le détecteur en mode imagerie ;
- les figures 4a et 4b, deux positions de l'élément optique commutable composé d'une seule lentille mince pour lesquelles, respectivement, les champs de vue des capteurs se recouvrent ou sont tangents.

Une caméra d'observation se compose schématiquement d'un système optique et d'un détecteur, le système optique projetant un faisceau de lumière sur le détecteur qui délivre un signal vidéo proportionnellement à la luminance reçue par le détecteur.

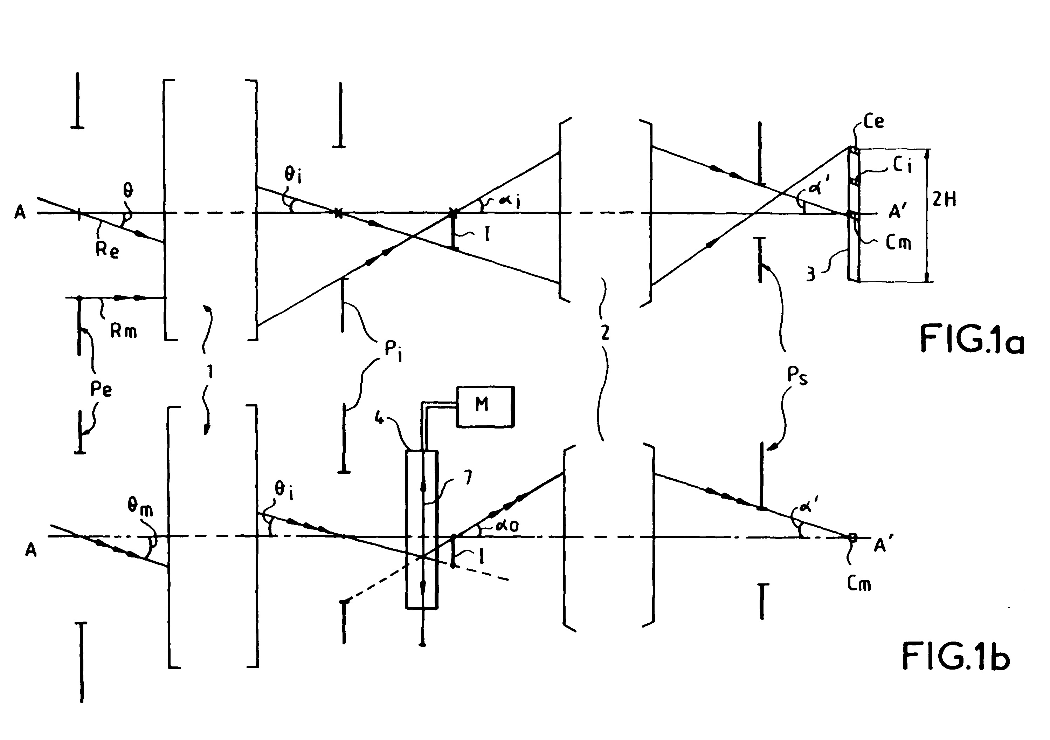

En référence à la figure 1a, le système optique, schématisé en coupe passant par un axe optique AA' d'une caméra d'observation selon l'invention, se compose classiquement,en mode d'imagerie courante, d'une pupille d'entrée $P_e$, d'un groupe optique d'entrée 1, d'un pupille intermédiaire $P_i$ et d'un groupe optique de projection 2 pour projeter, à travers une pupille de sortie $P_s$, coïncidant avec un écran froid dans le cas d'une imagerie infrarouge, un flux de lumière sur un détecteur multi-éléments 3. Le détecteur 3 est composé de capteurs élémentaires $C_i$ organisés selon une matrice ou une barrette sur une hauteur 2 H ; en particulier les capteurs référencés $C_m$ et $C_e$, séparés de H, sont disposés respectivement en position centrale et en position extrême sur la matrice ou la barrette.

Ce système optique à deux groupes optiques forme classiquement une image intermédiaire. Un tel système optique fonctionne en mode imagerie avec une ouverture numérique image $\alpha'$ et une ouverture numérique objet $\theta$, définissant le champ de vue de la caméra.

Un faisceau lumineux d'entrée provenant de la scène observée, et limité par la pupille d'entre $P_e$, est représenté, dans le but de clarifier l'exposé et de simplifier la figure, par deux rayons caractéristiques à simple et double flèche. Ces rayons, respectivement, un rayon $R_e$ et un rayon $R_m$, conjuguent, à travers l'ensemble du système optique en mode imagerie, les capteurs $C_e$ et $C_m$ aux points rejetés à l'infini respectivement dans la direction $\theta$ et dans la direction axiale moyenne AA'. Les rayons traversent le groupe 1 et forment une image intermédiaire I dans un espace intermédiaire entre $P_i$ et $P_s$; dans cet espace intermédiaire, l'angle du rayon extrême sur l'axe est $\theta_i$ et l'angle d'ouverture est $\alpha_i$. En sortie du groupe optique 2, les rayons $R_e$ et $R_m$ traversent la pupille de sortie $P_s$ avant de se projeter dans le plan du détecteur 3 selon $C_e$ et $C_m$.

En mode de calibration, le système optique de la caméra d'observation selon l'invention, tel qu'illustré sur la figure 1b, possède un élément optique supplémentaire 4 symbolisé sur la figure 1b par une lentille mince 7. Cet élément bascule en début de période de calibration sur l'axe optique AA', par liaison à un moteur tournant M.

La calibration consiste, comme évoqué ci-dessus, à relever des valeurs de référence du signal vidéo caractéristique des capteurs. Ces valeurs de référence sont ensuite sous-traites aux valeurs du signal vidéo obtenues en imagerie courante. Les moyens classiques de traitement analogique et/ou numériques de mémorisation et de soustraction de la caméra, ne concernent pas directement l'objet de l'invention, ne seront pas davantage explicités (pour plus d'informations, on peut se rapporter par exemple au brevet FR-A-2 652 471 déposé au nom de la Demanderesse).

L'interposition d'un élément optique 4 dans l'espace intermédiaire, disposé après la pupille $P_i$ de façon à créer une pupille intermédiaire dans le plan de l'image intermédiaire, projette finalement sur le capteur central $C_m$ tout rayon situé à l'intérieur d'un champ de vue d'ouverture $\theta_m$ pénétrant dans le système optique par le centre de la pupille d'entrée $P_e$, tel que le rayon limite marqué sur la figure 1b par trois flèches.

Dans ces conditions, le capteur central $C_m$, conjugué d'un point situé au centre de la pupille d'entrée $P_e$, reçoit un éclairement uniforme lié à la luminance moyenne de la scène vue dans le champ d'ouverture $\theta_m$.

De même, tous les capteurs $C_i$ sont conjugués de points respectifs situés dans le plan de la pupille d'entrée $P_e$. Ils reçoivent tous un flux uniforme correspondant à la luminance moyenne d'une scène vue dans un champ d'ouverture $\theta_i$, de valeur comprise entre $\theta_m$ et $\theta_e$, $\theta_e$ étant le champ de vue élémentaire du capteur $C_e$. La direction moyenne des champs de vue des capteurs dépend de la position du capteur et varie en fonction des caractéristiques de l'élément optique 4 qui peut être un élément simple ou composé.

Les caractéristiques en grandissement et en distance focale de l'élément optique 4 sont alors ajustées pour que les champs de vue des capteurs en mode de calibration se recouvrent au moins partiellement et recouvrent celui de la caméra en mode imagerie au moins partiellement. Il s'en suit que les capteurs sont exposés en mode calibration à des flux moyens correspondant sensiblement à la température moyenne de la scène observée en mode imagerie : les différences résiduelles entre les différents capteurs, liées à leur différence de sensibilité, sont ainsi éliminées.

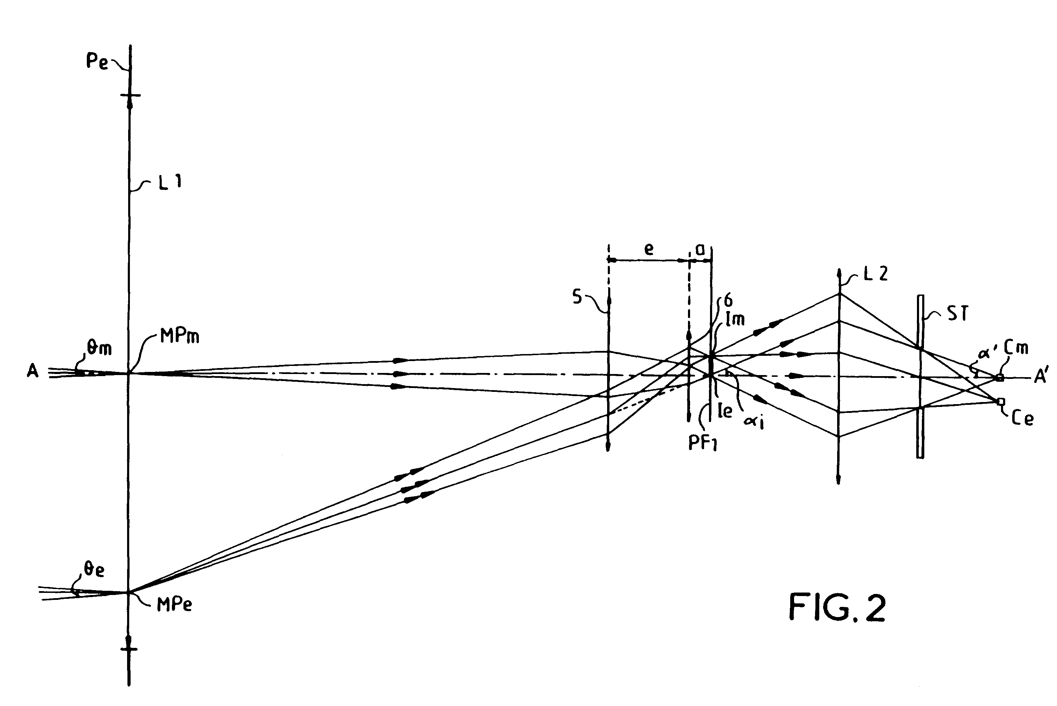

Selon un premier exemple de réalisation, illustré sur la figure 2, l'élément optique additionnel 4 est constitué de deux lentilles 5 et 6, de distances focales respectives $f_1$ et $f_2$. Sur la figure 2, les groupes optiques 1 et 2 sont, de manière simplifiée, représentés respectivement par des lentilles L1 et L2, de distances focales respectives F1 et F2, la pupille d'entrée $P_e$ étant limitée par la lentille frontale L1 située dans son plan et la pupille de sortie matérialisée par un stop ST. Sur cette figure 2, les champs de vue $\theta_m$ et $\theta_e$, d'un capteur central $C_m$ et d'un capteur $C_e$ situé en bordure de la barrette ou de la matrice détectrice sont matérialisés sous forme de deux rayons extrêmes entourant un rayon moyen, respectivement à simple et double flèche pour les capteurs $C_m$ et $C_e$ ; sont indiqués également l'ouverture intermédiaire $\alpha_i$ et l'ouverture image $\alpha'$ pour le capteur central. Le grandissement G de l'ensemble optique additionnel 4 est lié au champ de vue $O_m$ des capteurs centraux $C_m$ par la relation :

$$\sin \theta_m = -\,G.\frac{F}{F_1}\,\sin \alpha' \tag{1}$$

F étant la distance focale du système optique global.

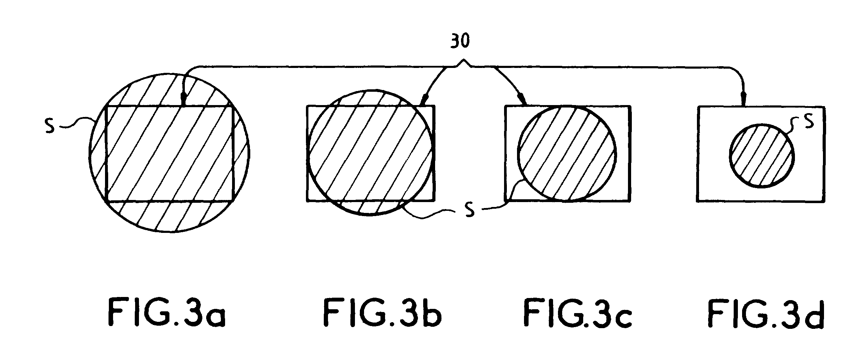

G est calculé à partir de la relation précédente en fonction notamment de la valeur du champ $\theta_m$. Or $\theta_m$ peut se déduire du champ $\theta$, champ de vue de la caméra en mode imagerie dépendant de $F_1$ et de la dimension du détecteur, dans des rapports simples. Par exemple, si l'image projetée sur le détecteur, représentée de manière simplifiée sur les figures 3a à 3d, est un rectangle 30, le champ de vue des capteurs centraux en mode calibration est choisi pour inscrire le champ de vue de la caméra en mode imagerie, matérialisé par la trace S de la scène dont la luminance moyenne est mesurée, à l'extérieur de l'image 30 (figure 3a), dans les grands ou les petits côtés de l'image (figure 3b et 3c) ou dans une zone centrale (figure 3d), définissant ainsi différents rapports de champ de vue.

Pour que les capteurs $C_i$ reçoivent des éclairements uniformes, caractéristiques de la luminance moyenne de la scène observée, les images intermédiaires telles que Im, le sur la figure 2, situées dans un plan $PF_1$ sont respectivement conjuguées par réfraction à travers l'élément additionnel 4 de points $MP_m$, $MP_e$ situés dans le plan de la lentille frontale $L_1$. Pour que tous les capteurs $C_e$ à $C_m$ de la barrette "voient" alors suivant la même direction, en mode calibration, il faut que les rayons homologues, moyens et extrêmes, incidents sur la lentille frontale $L_1$ restent parallèles. Cette condition se traduit par le rejet à l'infini de la pupille d'entrée du système en mode calibration.

Cette condition de conjugaison pupillaire peut être satisfaite lorsque l'élément optique 4 (dont le grandissement est déjà fixé, comme indiqué précédemment, par le rapport de champ voulu) est formé des deux lentilles 5 et 6. En effet, dans ce cas, les distances focales $f_1$ et $f_2$ des lentilles peuvent encore être choisies de manière à réaliser les conditions de conjugaison pupillaire. Un calcul optique permet d'exprimer cette condition de conjugaison pupillaire par une relation liant a, distance entre la lentille 6 et le plan intermédiaire PF1 et e, distance entre les deux lentilles 5 et 6 ; cette relation est de la forme :

$$\left(\frac{1}{Q}+\frac{1}{f_1}\right)^{-1} + e + a = 0$$

avec

$$Q = \left(\frac{1}{F_1 - a}+\frac{1}{f_2}\right)^{-1} - e$$

La valeur de e étant fixée par celle du grandissement, la valeur de a est alors obtenue par calcul itératif à l'aide de la relation précédente. Connaissant G, e et F1, il est aisé d'en déduire, par un calcul itératif, la valeur de a et la valeur de la distance focale $f_2$, puis celle de $f_1$ en utilisant la relation précédente et les relations suivantes, déduites de relations optiques classiques :

$$f_2 = \frac{aeG^{-1}}{F_1 + (a + e)\left(G^{-1} - 1\right)}$$

$$f_1 = \frac{(F_1 - a - e)(f_2 - a)e + a(F_1 - a - e)f_2}{(f_2 - a)(F_{1-a}) + a\,f_2}$$

Dans l'exemple de réalisation illustré à la figure 2, les valeurs suivantes sont utilisées : F = 90 mm ; F1 = 73,636 mm ; $\theta$ = 2,45, G = - 1/11; e = 10 mm, $f_2$ = 3,584 mm; $f_1$ = 13,938 mm

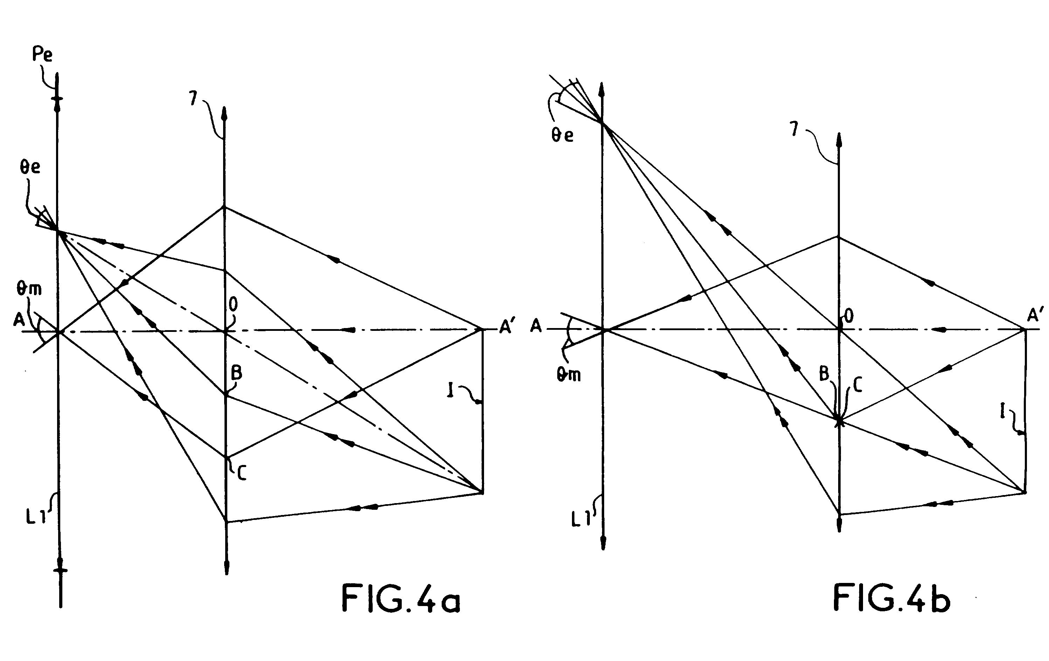

Selon un second exemple de réalisation illustré sur les figures 4a et 4b, l'élément optique additionnel 4 du système optique de la caméra selon l'invention, est constitué d'une simple lentille mince 7.

Dans ces conditions, d'une part, le grandissement de la lentille 7, qui est encore lié par la relation (1), est donc fixé lorsque le champ de vue des capteurs centraux est lui-même fixé a priori pour satisfaire, par exemple, l'un des rapports de champ illustré aux figures 3a à 3d ; d'autre part, si le grandissement de la lentille 7 est fixé, la position de cette dernière est alors arrêtée et la valeur de la distance focale de cette lentille, liée à la distance focale du système optique et aux positions relatives des éléments de ce système, n'est plus disponible pour satisfaire d'autres conditions, en particulier pour conserver un champ de vue constant le long de la barrette ou de la matrice de capteurs.

Il est possible, néanmoins, de permettre un recouvrement au moins partiel de ces champs de vue, en adaptant la position de la lentille additionnelle, mais en renonçant à la maîtrise du rapport de champ. Sur la figure 4a, la position de la lentille 7 est telle que les champs de vue $\theta_m$ des capteurs centraux $C_m$ et $\theta_e$ des capteurs $C_e$ de l'extrémité de barrette ou de matrice, se recouvrent avec un bord du champ de vue de l'un passant par le centre du champ de vue de l'autre. La position de la lentille 7 est alors réglée entre la pupille d'entrée $P_e$, où est disposée une lentille frontale. L1, et le plan de l'image intermédiaire I, par une égalité OB = BC, OB et OC étant les distances à l'axe des rayons caractéristiques au niveau de la lentille 7. La figure 4b illustre, toutes choses égales par ailleurs à la figure 4a, un cas limite où les champs de vue $\theta_m$ et $\theta_c$ des capteurs $C_m$ et $C_e$ sont tangents ; dans ce dernier cas, illustré également à la figure 1b, la lentille 7 passe par l'intersection des rayons caractéristiques (OB = OC). Lorsque la position de la lentille 7 ne dépasse pas la position limite illustrée sur la figure 4b, le champ de vue des capteurs centraux, illustré par exemple sur la figure 4a, reste suffisamment large pour englober celui de la caméra en mode imagerie : le recouvrement partiel entre les champs de vue des différents capteurs en mode calibration et celui de la caméra en mode imagerie est encore respecté.

Comme la scène reste très défocalisée en mode calibration, les basses fréquences spectrales sont éliminées et les variations de flux d'un capteur à son voisin sont suffisamment faibles pour obtenir des résultats satisfaisants, même lorsque les champs de vue des capteurs deviennent tangents. Il peut en fait être intéressant de faire la moyenne des flux centrées sur chaque capteur pour diminuer dans certains cas la dynamique globale de l'image tout en conservant les contrastes locaux.

L'invention n'est pas limitée aux modes de réalisation décrits et représentés ; en particulier, d'autres combinaisons optiques que celles composées des deux lentilles 5 et 6, ces lentilles pouvant d'ailleurs être simples ou composées, constitués de plus de deux lentilles minces, peuvent également être mises en oeuvre pour constituer l'élément optique additionnel sans sortir du cadre de l'invention.

## Revendications

1. Caméra à détecteur multi-éléments homogénéisé en sensibilité, comprenant un système optique de traitement du flux lumineux d'entrée pénétrant dans une pupille d'entrée ($P_e$) pour former une image optique de la scène observée sur un détecteur (3) constitué d'une mosaïque de capteurs élémentaires et un dispositif de traitement du signal vidéo afin de soustraire des valeurs de référence mémorisées du signal vidéo pendant une période de calibration aux valeurs courantes, caractérisée en ce qu'elle comprend également un élément optique commutable (4) interposé, en mode calibration, dans le flux de formation d'image optique et positionné dans le système entre un groupe optique d'entrée (1) et un groupe optique de projection (2) du flux lumineux sur le détecteur (3), cet élément commutable conjuguant chaque capteur ($C_i$) avec un point situé dans la pupille d'entrée ($P_e$) via une image intermédiaire située dans un plan d'image intermédiaire ($PF_1$), et les caractéristiques en grandissement et en distance focale de cet élément optique (4) étant choisies pour qu'il y ait en mode calibration un recouvrement partiel des champs de vue individuels des capteurs, et un recouvrement partiel des champs de vue de chacun des capteurs en mode calibration et du champ de vue de la caméra en mode imagerie courante.

2. Caméra selon la revendication 1, caractérisée en ce que l'élément optique additionnel (4) est constitué de deux lentilles amont (5) et aval (6) et en ce que le groupe optique d'entrée (1) est constitué d'une lentille frontale (L1) situé dans le plan de la pupille d'entrée ($P_e$), chaque image intermédiaire (Im, Ie) du plan d'image intermédiaire (PF1) étant conjugué d'un point ($MP_m$, $MP_e$) de la lentille frontale (L1) par réfraction sur deux lentilles (5,6) de l'élément optique additionnel (4) .

3. Caméra selon la revendication 2, caractérisée en ce que la vale.ur de grandissement (G) de l'élément optique (4) est choisie pour que le champ de vue correspondant ($\theta_m$) des capteurs centraux ($C_m$) du détecteur (3) en mode calibration se déduise du champ de vue (S) de la caméra en mode imagerie selon un rapport préétabli.

4. Caméra selon la revendication 3, caractérisé en ce que, pour satisfaire la conjugaison pupillaire entre les capteurs ($C_i$) et la pupille d'entrée ($P_e$) avec un recouvrement total des champs de vue des capteurs, la distance (a) entre la lentille avale (6) et le plan intermédiaire (PF1) et les distances focales ($f_1$) et ($f_2$) des lentilles (5) et (6) sont déterminées par les relations suivantes :

$$f_2 = \frac{aeG^{-1}}{F_1 + (a + e)\left(G^{-1} - 1\right)}$$

$$f_1 = \frac{(F_1 - a - e)(f_2 - a)e + a(F_1 - a - e)f_2}{(f_2 - a)(F_{1-a}) + a f_2}$$

$$\left(\frac{1}{Q} + \frac{1}{f_1}\right)^{-1} + e + a = 0$$

avec

$$Q = \left(\frac{1}{F_i - a} + \frac{1}{f_2}\right)^{-1} - e$$

e = distance entre les lentilles (5) et (6) constituant l'élément optique additionnel,
G = grandissement de l'élément optique additionnel.
$F_1$ = distance focale du groupe optique d'entrée.

5. Caméra selon la revendication 1, caractérisé en ce que l'élément optique additionnel (4) est constitué d'une seule lentille mince (7) dont la position est située entre celle pour laquelle la bordure du champ de vue des capteurs extrêmes ($C_e$) passe par le centre du champ de vue de capteurs centraux ($C_m$) et celle pour laquelle le champ de vue des capteurs extrêmes ($C_e$) est tangent à celui des capteurs centraux ($C_m$).

**Patentansprüche**

1. Kamera mit hinsichtlich der Empfindlichkeit vergleichmäßigtem Mehrelement-Detektor, mit einem optischen System für die Verarbeitung des in eine Eintrittspupille ($P_e$) eindringenden Eintrittslichtstroms, um ein optisches Bild der beobachteten Szene auf einem Detektor (3) zu erzeugen, der aus einem Mosaik von elementaren Sensoren gebildet ist, und mit einer Videosignal-Verarbeitungsvorrichtung, die gespeicherte Referenzwerte des Videosignals während einer Kalibrierungsperiode von den momentanen Werten subtrahiert, dadurch gekennzeichnet, daß sie außerdem ein umschaltbares optisches Element (4) enthält, das im Kalibrierungsmodus in den Strom für die Erzeugung des optischen Bildes eingesetzt ist und im System zwischen einer optischen Eintrittsgruppe (1) und einer optischen Projektionsgruppe (2), die den Lichtstrom auf den Detektor (3) projiziert, angeordnet ist, wobei dieses umschaltbare Element jedem Sensor ($C_i$) einen in der Eintrittspupille ($P_e$) befindlichen Punkt über ein Zwischenbild zuordnet, das sich in einer Zwischenbildebene ($PF_1$) befindet, wobei die Vergrößerungs- und Brennweiteneigenschaften dieses optischen Elements (4) in der Weise gewählt sind, daß im Kalibrierungsmodus eine teilweise Überlappung der einzelnen Gesichtsfelder der Sensoren und im normalen Abbildungsmodus eine teilweise Überlappung der Gesichtsfelder jedes der im Kalibrierungsmodus befindlichen Sensoren und des Gesichtsfeldes der Kamera vorhanden ist.

2. Kamera nach Anspruch 1, dadurch gekennzeichnet, daß das zusätzliche optische Element (4) aus zwei Linsen, einer vorderen Linse (5) und einer hinteren Linse (6), gebildet ist und daß die optische Eintrittsgruppe (1) aus einer Frontlinse (L1) gebildet ist, die sich in der Ebene der Eintrittspupille ($P_e$) befindet, wobei jedem Zwischenbild (Im, Ie) der Zwischenbildebene (PF1) ein Punkt ($MP_m$, $MP_e$) der Frontlinse (L1) durch Brechung an zwei Linsen (5, 6) des zusätzlichen optischen Elements (4) zugeordnet ist.

3. Kamera nach Anspruch 2, dadurch gekennzeichnet, daß der Vergrößerungswert (G) des optischen Elements (4) in der Weise gewählt ist, daß sich das entsprechende Gesichtsfeld ($\theta_m$) der zentralen Sensoren ($C_m$) des Detektors (3) im Kalibrierungsmodus aus dem Gesichtsfeld (S) der Kamera im Abbildungsmodus gemäß einem im voraus bestimmten Verhältnis ergibt.

4. Kamera nach Anspruch 3, dadurch gekennzeichnet, daß für die Erfüllung der Pupillenzuordnung zwischen den Sensoren ($C_i$) und der Eintrittspupille ($P_e$) mit einer vollständigen Überlappung der Gesichtsfelder der Sensoren der Abstand (a) zwischen der hinteren Linse (6) und der Zwischenebene (PF1) und die Brennweiten ($f_1$) und ($f_2$) der Linsen (5) und (6) durch die folgenden Beziehungen bestimmt sind:

$$f_2 \; = \; \frac{aeG^{-1}}{F_1 \; + \; (a \; + \; e)\left(G^{-1} \; - \; 1\right)}$$

$$f_1 = \frac{(F_1 - a - e)(f_2 - a)e + a(F_1 - a - e)f_2}{(f_2 - a)(F_{1-a}) + af_2}$$

$$\left(\frac{1}{Q} + \frac{1}{f_1}\right)^{-1} + e + a = 0$$

mit

$$Q = \left(\frac{1}{F_1 - a} + \frac{1}{f_2}\right)^{-1} - e$$

e = Abstand zwischen den Linsen (5) und (6), die das zusätzliche optische Element bilden,
G = Vergrößerung des zusätzlichen optischen Elements,
$F_1$ = Brennweite der optischen Eintrittsgruppe.

5. Kamera nach Anspruch 1, dadurch gekennzeichnet, daß das zusätzliche optische Element (4) aus einer einzigen dünnen Linse (7) gebildet ist, deren Position zwischen derjenigen, für die der Rand des Gesichtsfeldes der äußersten Sensoren ($C_e$) durch die Mitte des Gesichtsfeldes der zentralen Sensoren ($C_m$) verläuft, und derjenigen, für die das Gesichtsfeld der äußersten Sensoren ($C_e$) zu demjenigen der zentralen Sensoren ($C_m$) tangential ist, liegt.

## Claims

1. Camera with multi-element detector homogenized in sensitivity, comprising an optical system for processing the input light flux entering an entrance pupil ($P_e$) to form an optical image of the observed scene on a detector (3) consisting of a mosaic of elementary sensors and a device for processing the video signal so as to subtract stored reference values of the video signal during a calibration period from the current values, characterized in that it also comprises a switchable optical element (4) interposed, in calibration mode, in the optical image-forming flux and positioned within the system between an entrance optical member (1) and an optical member (2) for projecting the light flux onto the detector (3), this switchable element conjugating each sensor ($C_i$) with a point located in the entrance pupil ($P_e$) via an intermediate image located in an intermediate image plane ($PF_1$), and the magnification and focal length characteristics of this optical element (4) being chosen such that in calibration mode there is a partial overlap of the individual fields of view of the sensors, and a partial overlap of the fields of view of each of the sensors in calibration mode and of the field of view of the camera in current imaging mode.

2. Camera according to Claim 1, characterized in that the additional optical element (4) consists of two lenses, upstream (5) and downstream (6), and in that the entrance optical member (1) consists of a front lens (L1) located in the plane of the entrance pupil ($P_e$), each intermediate image (Im, Ie) of the intermediate image plane (PF1) being conjugate with a point ($MP_m$, $MP_e$) of the front lens (L1) through refraction on two lenses (5, 6) of the additional optical element (4).

3. Camera according to Claim 2, characterized in that the magnification value (G) of the optical element (4) is chosen such that the corresponding field of view ($\theta_m$) of the central sensors ($C_m$) of the detector (3) in calibration mode may be deduced from the field of view (S) of the camera in imaging mode in accordance with a preset ratio.

4. Camera according to Claim 3, characterized in that, in order to satisfy pupillary conjugation between the sensors ($C_i$) and the entrance pupil ($P_e$) with total overlap of the fields of view of the sensors, the distance (A) between the downstream lens (6) and the intermediate plane (PF1) and the focal lengths ($f_1$) and ($f_2$) of the lenses (5) and (6) are determined by the following relations:

$$f_2 = \frac{aeG^{-1}}{F_1 + (a + e)\left(G^{-1} - 1\right)}$$

$$f_1 = \frac{(F_1 - a - e)(f_2 - a)e + a(F_1 - a - e)f_2}{(f_2 - a)(F_{1-a}) + af_2}$$

$$\left(\frac{1}{Q} + \frac{1}{f_1}\right)^{-1} + e + a = 0$$

with

$$Q = \left(\frac{1}{F_i - a} + \frac{1}{f_2}\right)^{-1} - e$$

e = distance between the lenses (5) and (6) constituting the additional optical element,
G = magnification of the additional optical element,
$F_1$ = focal length of the entrance optical member.

5. Camera according to Claim 1, characterized in that the additional optical element (4) consists of a single thin lens (7) whose position is located between that for which the border of the field of view of the outermost sensors ($C_e$) passes through the centre of the field of view of the central sensors ($C_m$) and that for which the field of view of the outermost sensors ($C_e$) is tangential to that of the central sensors ($C_m$).

FIG.1a

FIG.1b

FIG.2

EP 0 549 446 B1

FIG.3a

FIG.3b

FIG.3c

FIG.3d

EP 0 549 446 B1

FIG.4a

FIG.4b